# EUROPEAN PATENT APPLICATION

(11) **EP 2 783 784 A2**
(43) Date of publication of application: **01.10.2014**
(21) Application number: 13190586.1
(22) Date of filing: 29.10.2013
(51) Int. Cl.: B23K 26/06

(54) **Picosecond laser processing device**

(30) Priority: 13.03.2013 KR 20130026829
(71) Applicant: Samsung Display Co., Ltd., Yongin-City, Gyeonggi-Do 446-711 (KR)
(72) Inventor: Yun, Young Jun, Cheonan-si, Chungcheongnam-do (KR); Kim, Ji Hoon, Cheonan-si, Chungcheongnam-do (KR); Chun, Min Ho, Cheonan-si, Chungcheongnam-do (KR); Kim, Young Bae, Cheonan-si, Chungcheongnam-do (KR)
(74) Representative: Gulde & Partner

(57) **Abstract**

There is provided a picosecond laser processing device including a picosecond laser (10) configured to output a picosecond laser beam (L1); and a phase difference controller (20) on a path of the picosecond laser beam (L1), the phase difference controller (20) being configured to change a phase difference of the picosecond laser beam (L1).

## Description

### BACKGROUND

### 1. Field

Embodiments of the present invention relate to a picosecond laser processing device.

### 2. Description of the Related Art

As electronic products or parts used in the electronic products become smaller in size, the need for high-precision processing technology is increasing. In addition, the type of manufacturing process and the type of materials used are becoming more diverse. To perform various processes with high precision and process various materials, laser processing devices are being widely used.

A laser processing device uses a pulse laser. Pulse lasers may be divided into nanosecond lasers, picosecond lasers, and femtosecond lasers according to pulse width. Depending on the design and type of pulse laser, an emitted laser beam may have relatively superior linear polarization characteristics compared to other pulse lasers. Nevertheless, ripples may be formed on a workpiece depending on changes in the amplitude of the laser beam. Generally, when a laser beam has a shorter pulse width, less heat is generated, and fewer ripples are formed.

When a workpiece is processed by a laser processing device using a picosecond laser, ripples may be formed on the workpiece. The ripples may remain because an irradiated portion of the workpiece does not melt due to relatively little generation of heat. As a result, the surface conditions of the workpiece may be poor.

### SUMMARY

Embodiments of the present invention provide a picosecond laser processing device which can reduce the formation of ripples on a workpiece.

Embodiments of the present invention also provide a picosecond laser processing device which can improve the surface conditions of a workpiece.

However, embodiments of the present invention are not restricted to the one set forth herein. The above and other aspects of the present invention will become more apparent to one of ordinary skill in the art to which the present invention pertains by referencing the detailed description of the present invention given below.

According to an embodiment of the present invention, there is provided a picosecond laser processing device including a picosecond laser configured to output a picosecond laser beam; and a phase difference controller on a path of the picosecond laser beam, the phase difference controller being configured to change a phase difference of the picosecond laser beam.

The phase difference controller may include a phase delay film.

The phase delay film may be configured to change the phase difference of the picosecond laser beam by approximately one quarter of a wavelength.

The phase difference controller may be configured to change the phase difference of the picosecond laser beam by approximately one quarter of a wavelength.

The device may include a stage for mounting a workpiece to be irradiated with the picosecond laser beam that passes through the phase difference controller thereon.

The device may include a holder configured to hold the workpiece.

The picosecond laser may be configured to output the picosecond laser beam such that the picosecond laser beam is substantially linearly polarized.

According to another aspect of the present invention, there is provided a picosecond laser processing device including a picosecond laser configured to output a picosecond laser beam; and a phase difference controller on a path of the picosecond laser beam and configured to continuously change a phase difference of the picosecond laser beam.

The phase difference controller may include a phase delay film.

The phase delay film may be configured to rotate.

The phase delay film may be configured to rotate 800 to 1600 times per minute.

A rotation axis of the phase delay film may be substantially parallel to a propagation direction of the picosecond laser beam.

The phase delay film may be configured to change the phase difference of the picosecond laser beam by one quarter of a wavelength.

The phase delay film may be configured to repeatedly rotate about a rotation axis in a first direction and a second direction different from the first direction.

According to another aspect of the present invention, there is provided a picosecond laser processing device including a picosecond laser configured to output a picosecond laser beam and continuously change an oscillation direction of the picosecond laser beam; and a phase difference controller on a path of the picosecond laser beam.

The picosecond laser may be configured to rotate about a direction in which the picosecond laser beam is output.

The picosecond laser may be configured to rotate 800 to 1600 times per minute.

The phase difference controller is configured to change a phase difference of the picosecond laser beam by one quarter of a wavelength.

According to another aspect of the present invention, there is provided a picosecond laser processing device including a picosecond laser configured to output a picosecond laser beam; an oscillation direction controller on a path of the picosecond laser beam, the oscillation direction controller being configured to continuously change an oscillation direction of the picosecond laser beam; and a phase difference controller on a path of the picosecond laser beam that passes through the oscillation direction controller.

The oscillation direction controller may include: a first electrode; a second electrode facing the first electrode; and a twisted nematic (TN) liquid crystal layer between the first electrode and the second electrode, wherein the oscillation direction controller is configured to continuously vary a potential difference between the first electrode and the second electrode.

According to another aspect of the present invention, there is provided a picosecond laser processing device comprising a picosecond laser configured to output a picosecond laser beam; and a phase difference controller on a path of the picosecond laser beam, the phase difference controller being configured to change a phase difference of the picosecond laser beam.

The phase delay film or the phase difference controller may be configured to change the phase difference of the picosecond laser beam by approximately one quarter of a wavelength.

The picosecond laser processing device may comprise a stage for mounting a workpiece to be irradiated with the picosecond laser beam that passes through the phase difference controller and/or further comprising a holder configured to hold the workpiece.

The phase difference controller may beconfigured to continuously change a phase difference of the picosecond laser beam.

The phase delay film may be configured to rotate, preferably at 800 to 1600 times per minute.

The picosecond laser may be configured to continuously change an oscillation direction of the picosecond laser beam.

The picosecond laser may be configured to rotate about a direction in which the picosecond laser beam is output, preferably at 800 to 1600 times per minute.

The picosecond laser processing device may comprise an oscillation direction controller on a path of the picosecond laser beam, the oscillation direction controller being configured to continuously change an oscillation direction of the picosecond laser beam.

### BRIEF DESCRIPTION OF THE DRAWINGS

The above and other aspects and features of the embodiments of the present invention will become more apparent by describing in detail exemplary embodiments thereof with reference to the attached drawings, in which:

FIG. 1 is a side view of a picosecond laser processing device according to an embodiment of the present invention;

FIG. 2 is a graph illustrating polarization components of a first picosecond laser beam according to an embodiment of the present invention;

FIG. 3 is a graph illustrating an oscillation direction of the first picosecond laser beam according to an embodiment of the present invention;

FIG. 4 is a graph illustrating polarization components of a second picosecond laser beam according to an embodiment of the present invention;

FIG. 5 is a graph illustrating an oscillation direction of the second picosecond laser beam according to an embodiment of the present invention;

FIG. 6 is a perspective view of a phase difference controller according to another embodiment of the present invention;

FIG. 7 is a graph illustrating an oscillation direction of a first picosecond laser beam incident to the phase difference controller according to another embodiment of the present invention;

FIG. 8 is a perspective view of a phase delay film according to another embodiment of the present invention;

FIG. 9 is a side view of a picosecond laser processing device according to another embodiment of the present invention;

FIG. 10 is a side view of a picosecond laser processing device according to another embodiment of the present invention; and

FIG. 11 is a cross-sectional view of the oscillation direction controller shown in FIG. 10.

### DETAILED DESCRIPTION

Aspects and features of the embodiments of the present invention and methods of accomplishing the same may be understood more readily by reference to the following detailed description of various embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and embodiments of the present invention will only be defined by the appended claims and their equivalents. Thus, in some embodiments, well-known structures and devices are not shown in order not to obscure the description of the invention with unnecessary detail. Like numbers refer to like elements throughout. In the drawings, the thickness of layers and regions are exaggerated for clarity.

It will be understood that when an element or layer is referred to as being "on," or "connected to" another element or layer, it can be directly on or connected to the other element or layer or intervening elements or layers may be present. In contrast, when an element is referred to as being "directly on" or "directly connected to" another element or layer, there are no intervening elements or layers present. As used herein, the term "and/or" includes any and all combinations of one or more of the associated listed items.

It will be understood that, although the terms first, second, etc., may be used herein to describe various elements, these elements should not be limited by these terms. These terms are only used to distinguish one element from another element. Thus, for example, a first element, a first component or a first section discussed below could be termed a second element, a second component or a second section without departing from the teachings of the present invention.

Embodiments of the present invention will now be described more fully with reference to the accompanying drawings, in which exemplary embodiments of the invention are shown.

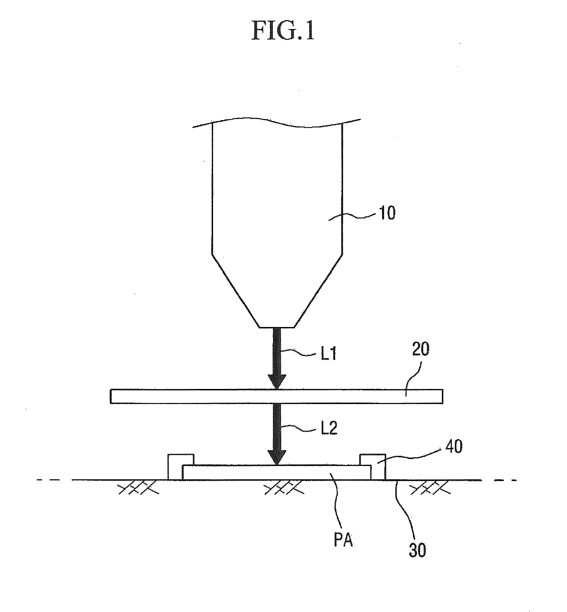

FIG. 1 is a side view of a picosecond laser processing device according to an embodiment of the present invention. Referring to FIG. 1, the picosecond laser processing device includes a picosecond laser 10 and a phase difference controller 20.

The picosecond laser 10 outputs a first picosecond laser beam L1. The first picosecond laser beam L1 may be a pulse laser beam with a pulse width of picoseconds. The pulse width of the first picosecond laser beam L1 may be, but is not limited to, several to several tens of picoseconds. The first picosecond laser beam L1 may have relatively superior linear polarization characteristics and may be substantially linearly polarized.

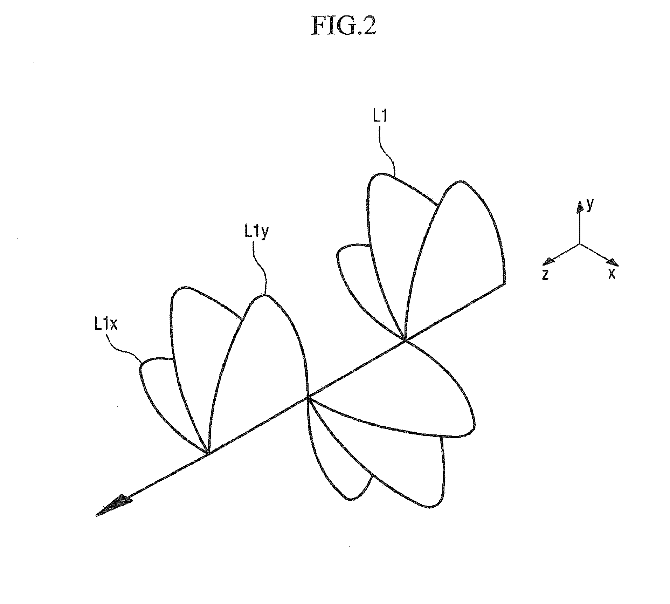

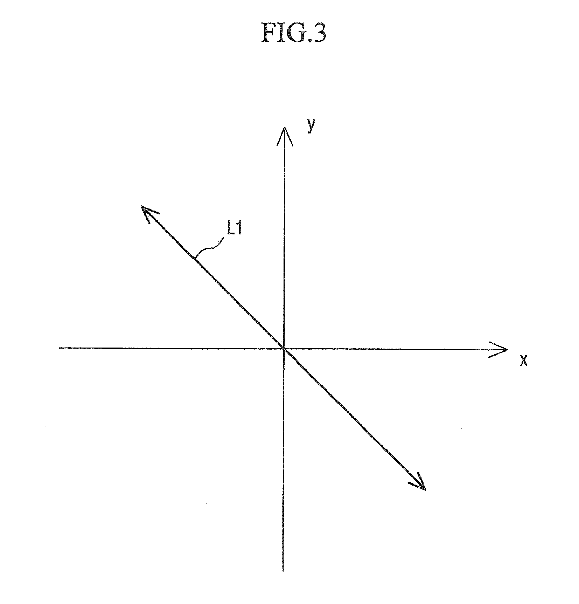

The first picosecond laser beam L1 will now be described in more detail with reference to FIGS. 2 and 3. FIG. 2 is a graph illustrating polarization components of the first picosecond laser beam L1 according to an embodiment of the present invention. FIG. 3 is a graph illustrating an oscillation direction of the first picosecond laser beam L1 according to an embodiment of the present invention.

Referring to FIG. 2, the first picosecond laser beam L1 may be divided into a first horizontal polarization component L1x and a first vertical polarization component L1y. The first horizontal polarization component L1x and the first vertical polarization component L1y are perpendicular to each other. Because the first picosecond laser beam L1 has relatively superior linear polarization characteristics, there may be substantially no phase difference between the first horizontal polarization component L1x and the first vertical polarization component L1y. In this case, the amplitude of the first picosecond laser beam L1 may linearly oscillate across second and fourth quadrants of the x-y coordinate system, as illustrated in FIG. 3.

According to some embodiments, the first horizontal polarization component L1x and the first vertical polarization component L1y may have a phase difference of half a wavelength. In this case, the amplitude of the first picosecond laser beam L1 may linearly oscillate across first and third quadrants of the x-y coordinate system.

Referring back to FIG. 1, the phase difference controller 20 may be placed on an optical path of the first picosecond laser beam L1 to change the phase difference of the first picosecond laser beam L1. The phase difference controller 20 may change the phase difference of the first picosecond laser beam L1 and output a second picosecond laser beam L2. Here, a phase difference refers to a difference in phase between a horizontal polarization component and a vertical polarization component of an electromagnetic wave. The second picosecond laser beam L2 may be generated as a result of changing the phase difference between the first horizontal polarization component L1x and the first vertical polarization component L1y. According to some embodiments, the phase difference controller 20 may include a phase delay film.

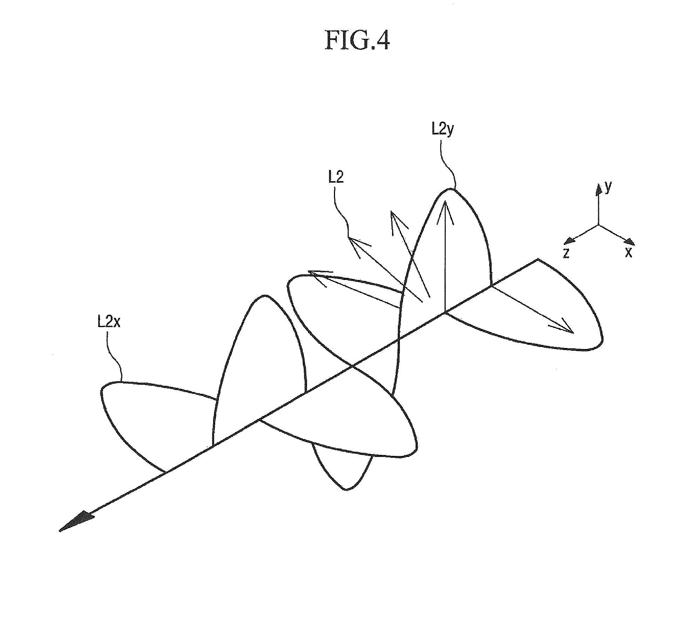

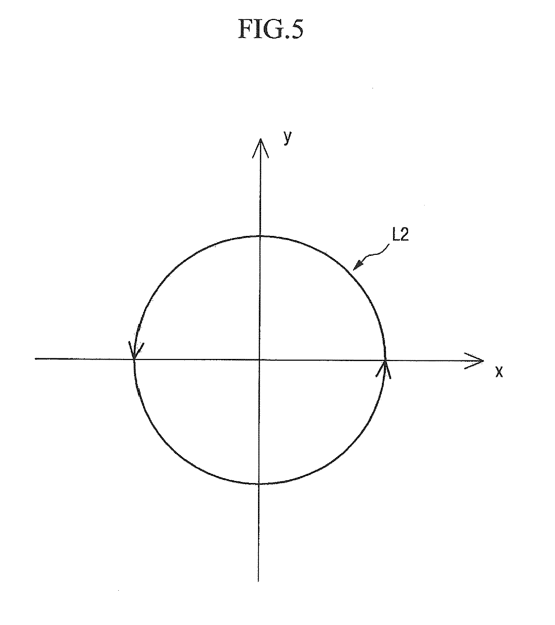

The second picosecond laser beam L2 will now be described in more detail with reference to FIGS. 4 and 5. FIG. 4 is a graph illustrating polarization components of the second picosecond laser beam L2 according to an embodiment of the present invention. FIG. 5 is a graph illustrating an oscillation direction of the second picosecond laser beam L2 according to an embodiment of the present invention.

Referring to FIG. 4, the second picosecond laser beam L2 may be divided into a second horizontal polarization component L2x and a second vertical polarization component L2y. The second horizontal polarization component L2x and the second vertical polarization component L2y are perpendicular to each other. The second horizontal polarization component L2x and the second vertical polarization component L2y may be out of phase by other than a multiple of half a wavelength.

In FIG. 4, a phase of the second horizontal polarization component L2x leads a phase of the second vertical polarization component L2y by one quarter of a wavelength. However, the present invention is not limited thereto. When the phase of the second horizontal polarization component L2x leads the phase of the second vertical polarization component L2y by one quarter of a wavelength, the phase difference controller 20 may change the phase difference of the first picosecond laser beam L1 by one quarter of a wavelength. That is, the phase difference controller 20 may delay the first vertical polarization component L1y to lag one quarter of a wavelength behind the first horizontal polarization component L1x. According to some embodiments, the phase difference controller 20 may be a phase delay film which delays the first vertical polarization component L1y to lag one quarter of a wavelength behind the first horizontal polarization component L1x.

When the phase of the second vertical polarization component L2x leads the second vertical polarization component L2y by one quarter of a wavelength, the amplitude of the second picosecond laser beam L2 may rotate counterclockwise in a circle, as illustrated in FIG. 5. Therefore, a change in the magnitude of the amplitude of the second picosecond laser beam L2 may be smaller than a change in the magnitude of the amplitude of the first picosecond laser beam L1. When a workpiece PA is processed by irradiating the first picosecond laser beam L1 directly to the workpiece PA, ripples may be formed on the workpiece PA depending on a change in the amplitude of the linearly polarized first picosecond laser beam L1 which has directivity. In the current embodiment of the present invention, the picosecond laser processing device does not irradiate the first picosecond laser beam L1 directly to the workpiece PA but irradiates the first picosecond laser beam L1 to the workpiece PA via the phase difference controller 20. Therefore, a change in the amplitude of the first picosecond laser beam L1 is reduced, which, in turn, reduces ripples formed on the workpiece PA. Consequently, the picosecond laser processing device can improve the surface conditions of the workpiece PA.

According to some embodiments, the phase difference controller 20 may delay the first horizontal polarization component L1x to lag one quarter of a wavelength behind the first vertical polarization component L1y. Accordingly, the second vertical polarization component L2y may lead the second horizontal polarization component L2x by one quarter of a wavelength, and the amplitude of the second picosecond laser beam L2 may rotate clockwise in a circle. In this case, as shown in FIGS. 4 and 5, a change in the magnitude of the amplitude of the second picosecond laser beam L2 may be smaller than a change in the magnitude of the amplitude of the first picosecond laser beam L1. Therefore, the picosecond laser processing device can reduce ripples formed on the workpiece PA, thereby improving the surface conditions of the workpiece PA.

According to some other embodiments, the phase difference controller 20 may delay the phase difference of the first picosecond laser beam L1 by other than a multiple of one quarter of a wavelength. In this case, the second picosecond laser beam L2 may be elliptically polarized. Even when the second picosecond laser beam L2 is elliptically polarized, a change in its amplitude may be smaller than a change in the amplitude of the substantially linearly polarized first picosecond laser beam L1. Therefore, even when the phase difference controller 20 delays the phase difference of the first picosecond laser beam L1 by other than a multiple of one quarter of a wavelength, because the magnitude of the second picosecond laser beam L2 changes less than the magnitude of the amplitude of the first picosecond laser beam L1, the picosecond laser processing device can reduce ripples formed on the workpiece PA, thereby improving the surface conditions of the workpiece PA.

Referring back to FIG. 1, the picosecond laser processing device may further include a stage 30 and a holder 40. The workpiece PA may be mounted on the stage 30. The stage 30 may be moved such that the second picosecond laser beam L2 can irradiate a desired portion of the workpiece PA. According to some embodiments, the stage 30 may not be moved (e.g., the stage 30 may be fixed or stable relative to the picosecond laser 10). Instead, the picosecond laser 10 may be moved such that the second picosecond laser beam L2 can be irradiated to a desired portion of the workpiece PA. According to other embodiments, both the stage 30 and the picosecond laser 10 may be moved. The holder 40 may hold the workpiece PA to prevent or substantially prevent the movement of the workpiece PA relative to the stage 30. The shape of the holder 40 shown in FIG. 1 is merely an example and can be varied to other shapes known to those of ordinary skill in the art according to embodiments of the present invention.

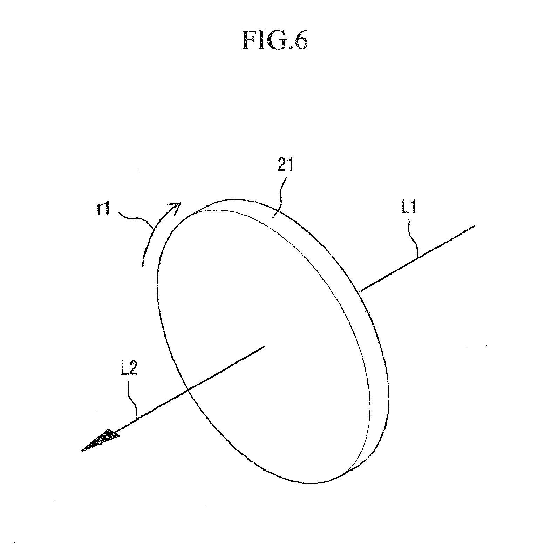

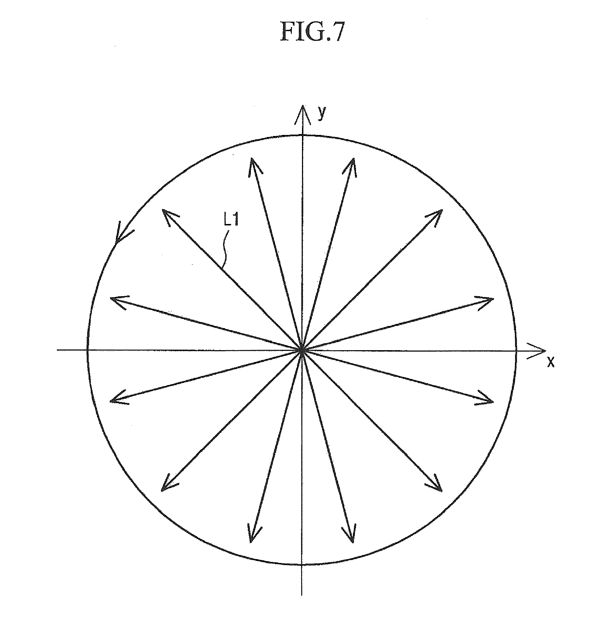

Hereinafter, another embodiment of the present invention will be described with reference to FIGS. 6 and 7. FIG. 6 is a perspective view of a phase difference controller 21 according to another embodiment of the present invention. FIG. 7 is a graph illustrating an oscillation direction of a first picosecond laser beam L1 incident to the phase difference controller 21 according to another embodiment of the present invention. Although not illustrated in FIGS. 6 and 7, a picosecond laser 10, a stage 30, and a holder 40 according to the current embodiment are substantially identical or substantially similar to those identified by the same names in FIG. 1.

Referring to FIG. 6, the phase difference controller 21 may be formed of a phase delay film. The phase difference controller 21 may rotate in a first direction r1. When viewed in the direction of a surface of the phase difference controller 21 from which a second picosecond laser beam L2 emerges, the first direction r1 may be a clockwise direction. A rotation axis of the phase difference controller 21 may be, but is not limited to, substantially parallel to a propagation direction of the first picosecond laser beam L1 or the second picosecond laser beam L2.

When the phase difference controller 21 rotates in the first direction r1, the oscillation direction of the first picosecond laser beam L1 incident to the phase difference controller 21 may rotate in a counterclockwise direction with respect to the phase difference controller 21, as illustrated in FIG. 7. In this case, a phase difference of the second picosecond laser beam L2 changes continuously, thus causing a polarization state of the second picosecond laser beam L2 to change continuously. For example, the polarization state of the second picosecond laser beam L2 may change continuously in the order of linear polarization, elliptical polarization, circular polarization, and linear polarization. If the polarization state of the second picosecond laser beam L2 changes continuously, the oscillation direction of the second picosecond laser beam L2 does not have directivity. Therefore, when the second picosecond laser beam L2 is irradiated to a workpiece PA, the formation of ripples can be reduced, thereby improving the surface conditions of the workpiece PA.

According to some embodiments, the phase difference controller 21 may rotate 800 to 1600 times per minute. When the phase difference controller 21 rotates slowly, the polarization state of the second picosecond laser beam L2 may change slowly. This can reduce the effect of the oscillation direction of the second picosecond laser beam L2 on suppressing the formation of ripples. When the phase difference controller 21 rotates too fast, the vibrations generated as the phase difference controller 21 rotates can undermine the surface conditions of the workpiece PA. Therefore, the phase difference controller 21 rotating 800 to 1600 times per minute can reduce the formation of ripples by continuously changing the polarization state of the second picosecond laser beam L2 and reduce the effect of vibrations from the phase difference controller 21. As a result, the surface conditions of the workpiece PA can be improved.

According to some embodiments, the phase difference controller 21 may rotate in an opposite direction to the first direction r1. Even when the phase difference controller 21 rotates in the opposite direction to the first direction r1, the phase difference of the second picosecond laser beam L2 changes continuously, thereby continuously changing the polarization state of the second picosecond laser beam L2. In this case, the oscillation direction of the second picosecond laser beam L2 does not have directivity. Therefore, when the second picosecond laser beam L2 is irradiated to the workpiece PA, the formation of ripples can be reduced, thereby improving the surface conditions of the workpiece PA.

In FIGS. 6 and 7, the phase difference controller 21 formed of a phase delay film is rotated to continuously change the phase difference of the second picosecond laser beam L2. However, this is merely an example, and the phase difference of the second picosecond laser beam L2 can be continuously changed by using other methods known to those of ordinary skill in the art. For example, after a first horizontal polarization component L1x and a first vertical polarization component L1y of the first picosecond laser beam L1 are divided, if they are coupled by continuously changing a path difference between the first horizontal polarization component L1x and the first vertical polarization component L1y, the second picosecond laser beam L2 whose phase difference varies continuously can be generated.

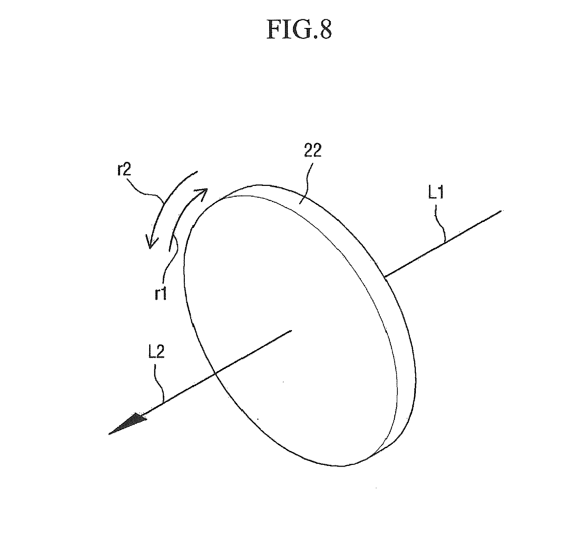

Hereinafter, another embodiment of the present invention will be described with reference to FIG. 8. FIG. 8 is a perspective view of a phase difference controller 22 according to another embodiment of the present invention. Although not illustrated in FIG. 8, a picosecond laser 10, a stage 30, and a holder 40 according to the current embodiment are substantially identical or substantially similar to those identified by the same names in FIG. 1.

Referring to FIG. 8, the phase difference controller 22 may be formed of a phase delay film. The phase difference controller 22 may repeatedly rotate in a first direction r1 and a second direction r2. That is, after the phase difference controller 22 rotates at a specific angle in the first direction r1, it may rotate at a specific angle in the second direction r2 and then rotate again at the specific angle in the first direction r1. When viewed in the direction of a surface of the phase difference controller 22 from which a second picosecond laser beam L2 emerges, the first direction r1 may be a clockwise direction, and the second direction r2 may be a counterclockwise direction. Even when the phase difference controller 22 repeatedly rotates in the first direction r1 and the second direction r2, a polarization state of the second picosecond laser beam L2 may change continuously, causing the oscillation direction of the second picosecond laser beam L2 to not have directivity. Therefore, when the second picosecond laser beam L2 is irradiated to a workpiece PA, the formation of ripples can be reduced, thereby improving the surface conditions of the workpiece PA.

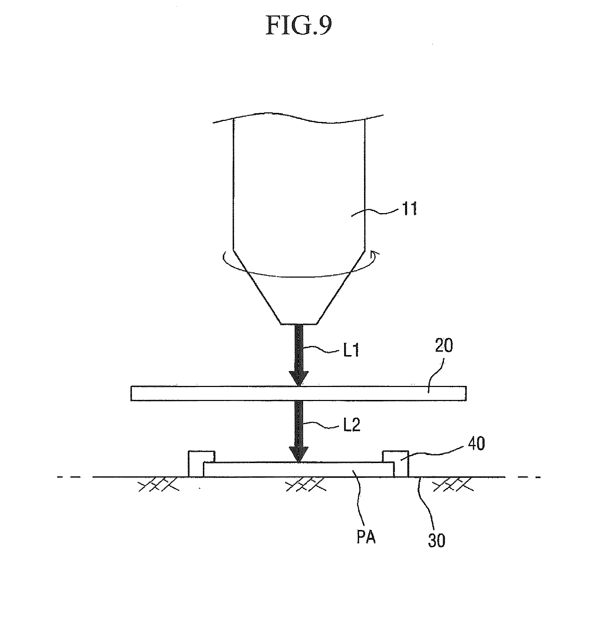

Hereinafter, another embodiment of the present invention will be described with reference to FIG. 9. FIG. 9 is a side view of a picosecond laser processing device according to another embodiment of the present invention.

Referring to FIG. 9, a picosecond laser 11 may continuously change an oscillation direction of a first picosecond laser beam L1. The oscillation direction of the first picosecond laser beam L1 may rotate in a counterclockwise direction as illustrated in FIG. 7 or in a clockwise direction. If the oscillation direction of the first picosecond laser beam L1 is changed continuously, the first picosecond laser beam L1 with the continuously changing oscillation direction may enter a phase difference controller 20, thus causing a phase difference of a second picosecond laser beam L2 to change continuously. In this case, a polarization state of the second picosecond laser beam L2 may change continuously, and an oscillation direction of the second picosecond laser beam L2 may not have directivity. Therefore, when the second picosecond laser beam L2 is irradiated to a workpiece PA, the formation of ripples can be reduced, thereby improving surface conditions of the workpiece PA.

The picosecond laser 11 may rotate in order to continuously change the oscillation direction of the first picosecond laser beam L1. The picosecond laser 11 may rotate about an axis parallel to the direction in which the first picosecond laser beam L1 is output. According to some embodiments, the picosecond laser 11 may rotate at a speed of 800 to 1600 rotations per minute.

In FIG. 9, the picosecond laser 11 rotates in order to continuously change the oscillation direction of the first picosecond laser beam L1. However, this is merely an example, and the picosecond laser 11 can output the first picosecond laser beam L1 whose oscillation direction is continuously changed by other methods known to those of ordinary skill in the art.

The phase difference controller 20, a stage 30 and a holder 40 according to the current embodiment are substantially identical or substantially similar to those identified by the same names in FIG. 1, and thus their description is omitted.

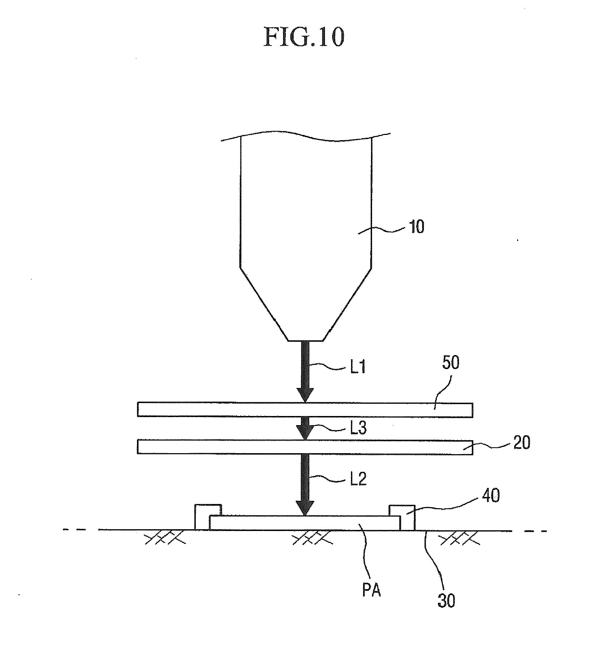

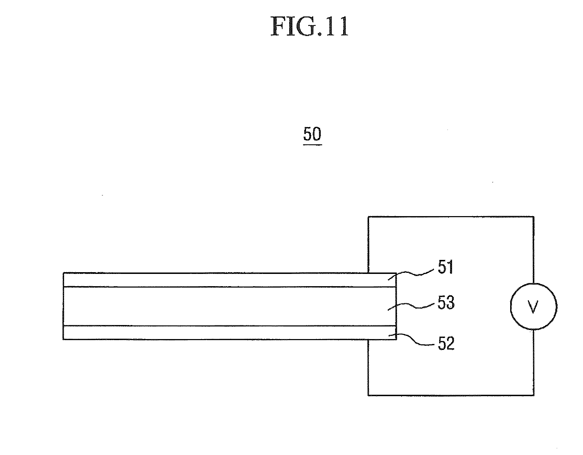

Hereinafter, another embodiment of the present invention will be described with reference to FIGS. 10 and 11. FIG. 10 is a side view of a picosecond laser processing device according to another embodiment of the present invention. FIG. 11 is a cross-sectional view of an oscillation direction controller 50 shown in FIG. 10.

Referring to FIG. 10, the picosecond laser processing device includes a picosecond laser 10, a phase difference controller 20, and the oscillation direction controller 50. The oscillation direction controller 50 is placed on a path of a first picosecond laser beam L1. The oscillation direction controller 50 may output a third picosecond laser beam L3 by continuously changing an oscillation direction of the first picosecond laser beam L1.

An oscillation direction of the third picosecond laser beam L3 may rotate in a counterclockwise direction as illustrated in FIG. 7, rotate in a clockwise direction, or repeatedly rotate in the clockwise direction and the counterclockwise direction. The phase difference controller 20 may be placed on a path of the third picosecond laser beam L3 and output a second picosecond laser beam L2 by changing a phase difference of the third picosecond laser beam L3. When the phase of the third picosecond laser beam L3 changes continuously, a phase difference of the second picosecond laser beam L2 also changes continuously, thus causing a polarization state of the second picosecond laser beam L2 to change continuously and an oscillation direction of the second picosecond laser beam L2 to not have directivity. Therefore, when the second picosecond laser beam L2 is irradiated to a workpiece PA, the formation of ripples can be reduced, thereby improving the surface conditions of the workpiece PA.

Other features and aspects of the picosecond laser 10 and the phase difference controller 20 are substantially identical or substantially similar to those of their counterparts indicated by the same names in FIG. 1, and thus their description is omitted.

The oscillation direction controller 50 will now be described in more detail with reference to FIG. 11. Referring to FIG. 11, the oscillation direction controller 50 may include a first electrode 51, a second electrode 52, and a twisted nematic (TN) liquid crystal layer 53. The first electrode 51 and the second electrode 52 may be placed to face each other on opposing surfaces of the liquid crystal layer 53. The first electrode 51 and the second electrode 52 may be formed of a transparent conductive material. For example, the first electrode 51 and the second electrode 52 may be formed of, but not limited to, indium tin oxide (ITO) or indium zinc oxide (IZO). A voltage may be applied to each of the first electrode 51 and the second electrode 52 to create a potential difference V between the first electrode 51 and the second electrode 52. The potential difference V may vary continuously. The first picosecond laser beam L1 may enter the first electrode 51, and the third picosecond laser beam L3 may emerge from the second electrode 52.

The TN liquid crystal layer 53 may be positioned between the first electrode 51 and the second electrode 52. The TN liquid crystal layer 53 may change an oscillation direction of an electromagnetic wave that passes therethrough according to the potential difference V. When the potential difference V varies continuously, the oscillation direction of the third picosecond laser beam L3 may change continuously because the TN liquid crystal layer 53 can change the oscillation direction of the electromagnetic wave that passes therethrough according to the potential difference V. When the oscillation direction of the third picosecond laser beam L3 changes continuously, the phase difference of the second picosecond laser beam L2 may change continuously, causing the polarization state of the second picosecond laser beam L2 to change continuously and the oscillation direction of the second picosecond laser beam L2 to not have directivity. Therefore, when the second picosecond laser beam L2 is irradiated to the workpiece PA, the formation of ripples can be reduced, thereby improving the surface conditions of the workpiece PA.

Referring back to FIG. 10, the picosecond laser processing device may further include a stage 30 and a holder 40. The stage 30 and the holder 40 according to the current embodiment are substantially identical or substantially similar to those identified by the same names in FIG. 1, and thus their description is omitted.

Embodiments of the present invention provide at least one of the following advantages.

That is, the formation of ripples on a workpiece can be reduced.

In addition, the surface conditions of the workpiece can be improved.

## Claims

1. A picosecond laser processing device comprising:
a picosecond laser (10) configured to output a picosecond laser beam (L1); and
a phase difference controller (20) on a path of the picosecond laser beam (L1), the phase difference controller (20) being configured to change a phase difference of the picosecond laser beam (L1).

2. The device of claim 1, wherein the phase difference controller (20) comprises a phase delay film.

3. The device of claim 1 or 2, wherein the phase delay film or the phase difference controller (20) is configured to change the phase difference of the picosecond laser beam by approximately one quarter of a wavelength.

4. The device of one of the preceeding claims, further comprising a stage (30) for mounting a workpiece (PA) to be irradiated with the picosecond laser beam (L2) that passes through the phase difference controller (20) and/or further comprising a holder (40) configured to hold the workpiece (PA).

5. The device of one of the preceeding claims, wherein the picosecond laser (10) is configured to output the picosecond laser beam (L1) such that the picosecond laser beam (L1) is substantially linearly polarized.

6. The device of claim 1 or 2, wherein the phase difference controller (20) is configured to continuously change a phase difference of the picosecond laser beam (L1).

7. The device of claim 6, wherein the phase delay film is configured to rotate, preferably at 800 to 1600 times per minute.

8. The device of claim 6 or 7, wherein a rotation axis of the phase delay film is substantially parallel to a propagation direction of the picosecond laser beam (L1).

9. The device of one of claims 6 to 8, wherein the phase delay film is configured to change the phase difference of the picosecond laser beam (L1) by one quarter of a wavelength.

10. The device of one of claims 6 to 9, wherein the phase delay film is configured to repeatedly rotate about a rotation axis in a first direction (r1) and a second direction (r2) different from the first direction.

11. The device of claim 1, wherein the picosecond laser (10) is configured to continuously change an oscillation direction of the picosecond laser beam (L1).

12. The device of claim 11, wherein the picosecond laser (10) is configured to rotate about a direction in which the picosecond laser beam is output, preferably at 800 to 1600 times per minute.

13. The device of claim 11 or 12, wherein the phase difference controller (20) is configured to change a phase difference of the picosecond laser beam (L1) by one quarter of a wavelength.

14. The device of claim 1, comprising an oscillation direction controller (50) on a path of the picosecond laser beam (L1), the oscillation direction controller (50) being configured to continuously change an oscillation direction of the picosecond laser beam (L1).

15. The device of claim 14, wherein the oscillation direction controller (50) comprises:
a first electrode (51);
a second electrode facing the first electrode (52); and
a twisted nematic liquid crystal layer (53) between the first electrode (51) and the second electrode (52),
wherein the oscillation direction controller (50) is configured to continuously vary a potential difference between the first electrode (51) and the second electrode (52).
